# EUROPEAN PATENT APPLICATION

(11) **EP 4 636 345 A1**
(43) Date of publication of application: **22.10.2025**
(21) Application number: 24315199.0
(22) Date of filing: 19.04.2024
(51) Int. Cl.: F28D 15/02, H02B 1/56, H02G 5/10

(54) **THERMAL AND MECHANICAL MANAGEMENT DEVICE AND SYSTEM COMPRISING SUCH A DEVICE**

(71) Applicant: Commissariat à l'Energie Atomique et aux Energies Alternatives, 75015 Paris (FR); SCHNEIDER ELECTRIC INDUSTRIES SAS, 92500 Rueil-Malmaison (FR)
(72) Inventor: Mariotto, Mathieu, 38054 GRENOBLE (FR); Rigal, Lucas, 38054 GRENOBLE (FR); Bonnefoy, Vincent, 38054 GRENOBLE (FR); Pham, Quynh-Trang, 38054 GRENOBLE (FR); Soriano, Olivier, 38054 GRENOBLE (FR); Kuentz, Emmanuel, 38640 CLAIX (FR); Summer, Raimund, 93049 REGENSBURG (DE); Triozon, André, 71000 MACON (FR)
(74) Representative: Brevalex

(57) **Abstract**

A thermal and mechanical management device for conducting heat from a hot source to a cold source in a gas insulated electrical switching gear comprising a heat pipe formed as a spring element and at least partially formed as an S-shaped spring element. The S-shaped spring element following a path comprising a first arcuate portion, a second arcuate portion opposing the first portion, and being framed by a frame bordered by both the hot source and the cold source. The arc measure of each of the first and second arcuate portions being at least 180 degrees.

## Description

### Technical Field

The invention concerns a thermal and mechanical management device for conducting heat from a hot source to a cold source and a system comprising such a device. In particular, it concerns a device and a system for thermal management of hotspots within gas insulated, Medium Voltage Switchgear and specifically circuit breakers.

The term "Medium Voltage" (also designated "MV") is commonly used for distribution systems with voltages above 1 kV and generally applied up to and including 52 kV. The connection of an electrical installation to a MV utility distribution network is always realized by means of a dedicated MV substation. One of the functions performed by such substation is a general protection of the installation itself. To achieve this protection function, a switching device such as, for example a circuit breaker, is employed. This device enables the connection or disconnection of electrical pole of each electrical phase of the busbar carrying the electrical load. Such a switching device is generally contained within an airtight tank.

During operation, a nominal and unsteady operating condition can lead to a hot spot on the circuit breaker for example on a busbar within the circuit breaker. In orderto allow continued operation and to prevent damage, such a hot spot must be cooled. Typically, such cooling or "thermal management" is achieved using a heat link between the hot spot and a casing of the airtight tank.

Thermal management in applications such as this is a real challenge given the continually increasing electric load requirements to supply increasingly more compact and efficient systems. Design on such a heat link must accomplish two main goals. The heat link must be able to resist relative movement between the switching device and the airtight tank due to thermal expansion as well as other operational vibration coupled with thermal management. As described above, the heat link must be capable of conducting heat so as to provide effective cooling. In order to reflect these capabilities, such a heat link will be referred to as a thermal and mechanical management device.

As used in this document, the lower case term "high voltage" does not have a specific technical meaning and encompasses Medium Voltage as defined above.

### State of the Art

A well known device for providing cooling to a hotspot within switching equipment is a heat pipe. A heat pipe is a heat-transfer device that employs phase transition to transfer heat between a hot source and a cold source. A known heat pipe is a pulsating heat pipe (PHP). The PHP has found wide application in that, in contrast with for example a thermosiphon based heat pipe, it is able to operate even in conditions where a hot spot is situated above a cold source.

A PHP consists of at least one sealed and evacuated tube typically made of a highly thermally conductive material such as copper. The tube contains a working fluid present in both the liquid and vapour phase in the form of alternating liquid "slugs" and gas bubbles. During operation, the fluid flow within a PHP is unsteady and exhibits pulsating behavior which helps enhance heat transfer by promoting mixing and improving the fluid distribution throughout the system.

EP3865803 shows a flexible ribbon form PHP having a flexible monolithic, mechanically compliant body that has one or more channels provided between an evaporator portion, for attachment to the hot source, and a condenser portion, for attachment to the cold source. No consideration is given to optimizing the stress distribution along the body of the PHP caused by relative movement of the evaporator and condenser ends. An uneven stress distribution will exacerbate fatigue and stress cracking and result in a shortened product life with associated maintenance costs.

One goal of the present invention is to overcome at least part of the above mentioned drawbacks.

### Summary of the Invention

In a first aspect, a thermal and mechanical management device is described for conducting heat from a hot source to a cold source in a gas insulated electrical switching gear.

The device comprises a heat pipe formed as a spring element for connecting the hot source to the cold source.

The heat pipe may be at least partially formed as an S-shaped spring element.

According to one example embodiment, at least part of the heat pipe follows an S-shaped path comprising a first arcuate portion, a second arcuate portion opposing the first portion, and is framed by a frame bordered by both the hot source and the cold source; the arc measure of each of the first and second arcuate portions being at least 180 degrees.

Further, the arc measure of one of the first and second arcuate portions may be greater than 180 degrees.

Still further, the arc measure of one of the first and second arcuate portions may be greater than 270 degrees.

Yet further, the arc measure of both of the first and second arcuate portions is greater than 180 degrees.

Yet further still, the arc measure of both of the first and second arcuate portions may be greater than 270 degrees.

In some arrangments, the heat pipe follows a path which may comprise an at least partially S-shaped path within an S-shaped path.

The frame may be a substantially parallelepiped frame such as to accommodate the operation requirements of the thermal and mechanical management device.

In this context, a tangent to the path located at a one end of the S-shaped path and/or at the other end of the S-shaped path may be parallel to a side of the parallelepiped frame.

Further, the tangent to the path located at the one end of the S-shaped path and the tangent to the path located at the other end of the S-shaped path may be parallel to substantially parallel sides of the parallelepiped frame.

The heat pipe described above may have the form of a ribbon.

The heat pipe described above may be a pulsated heat pipe.

Where the heat pipe is a pulsated heat pipe, this may comprise a continuous tubing circuit made up of lengthwise ducts running the length of an adiabatic section of the heat pipe comprising the first and second arcuate portions of the S-shaped path, turnaround ducts fluidly attached to each end of the lengthwise ducts form a pair of phase change sections to the continuous fluid circuit of the heat pipe, and a filling within the continuous fluid circuit comprising slugs of a liquid in a liquid phase interspersed by gas bubbles of the liquid in gas phase.

The turnaround ducts and/or lengthwise ducts may have a rectangular cross-section.

The pulsating heat may be composed of copper or a copper alloy.

The turnaround ducts of the heat pipe and/or lengthwise ducts of the heat pipe may comprise copper or an alloy of copper.

Alternatively, the lengthwise ducts may comprise a polymer material.

The working fluid may be water.

For example, the slugs of liquid are water and the gas bubbles are water vapour.

The adiabatic and the phase change sections of the heat pipe may comprise a base sheet with machined troughs defining the path of the continuous fluid circuit and a cover sheet applied, for example by brazing, to the base sheet such as to form the ducts. Other techniques for joining the base sheet and the cover sheet include laser welding, with green and blue laser welding being particularly suited to copper.

As an alternative, the turnabout ducts of the phase change sections of the heat pipe may be formed by additive manufacturing technique and the adiabatic section comprises extruded pipes defining the path of the lengthwise ducts.

As a yet further alternative, the turnaround ducts of the phase change sections of the heat pipe may be formed by additive manufacturing technique with the adiabatic section comprising a base sheet with machined troughs defining the lengthwise ducts of the path of the continuous fluid circuit and a cover sheet applied to the base sheet such as to form the lengthwise ducts.

For example, individual component parts of the heat pipe are connected by brazing.

In a second aspect, a system is described comprising a hot source, a cold source, and a thermal and mechanical management device according to the first aspect above such that one end of the thermal and mechanical management device is connected to the hot source and the other end to the cold source.

The hot source is may advantageously be thermally connected to a hotspot within a gas insulated electrical switching gear enclosed within a casing.

For example, the casing comprises the frame and the cold source.

For example, the casing constitutes the cold source and defines at least in part the framing frame of the S-shaped path.

For applications such as use within electrical switching gear, at least one of the end of the thermal and mechanical management device may be connected to the hot source or the cold source via an electrically insulating assembly.

### Brief description of the drawings

The above and other aspects, features and other advantages of the present disclosure will be more clearly understood from the following detailed description taken in conjunction with the accompanying drawings, in which:
Fig. 1 is a depiction of an S-shaped thermal and mechanical management device.
Fig. 2 depicts an S-shaped path.
Figs 3a, 3b and 3c are further depictions of an S-shaped path.
Fig 4 depicts yet a further S-shaped path.
Fig 5 shows tubing within a pulsating heat pipe.
Fig 6 shows the construction of a pulsating heat pipe.

### Detailed description

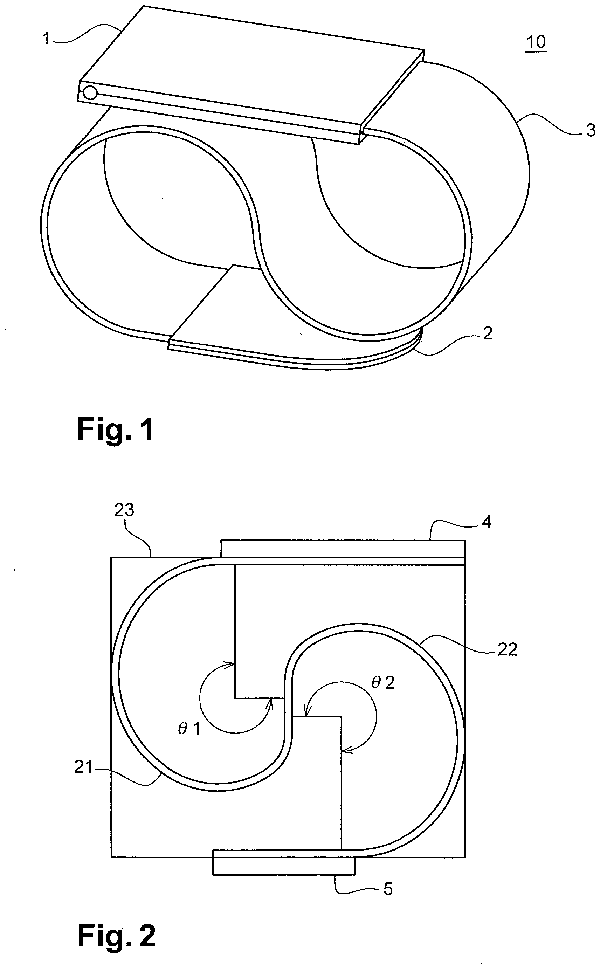

Fig. 1 shows a thermal and mechanical management device 10 for conducting heat from a hot source to a cold source. A heat pipe 3, taking the form of a spring element, is connected at the one end to an evaporator plate 2 and at the other end to a condenser plate 1. Such a spring element is configured to deform elastically along an axis running between the evaporator plate 2 and the condenser plate 1. In operation, the evaporator plate 2 is affixed to a hot source 5 and the condenser plate to a cold source 4 in, for example, gas insulated electrical switching gear described in the introduction above. In an illustrative example, the hot source 5 is a hotspot on a busbar within electrical switchgear and the cold source is a heatsink forming part of the casing of the electrical switchgear. As shown, the heat pipe takes the form of a ribbon.

As will be set out in more detail below, the form of the path adopted by the heat pipe between the hot source 5 and the cold source 4, that is to say between the evaporator plate 2 and the condenser plate 1, is significant to the ability of the heat pipe to accommodate displacement of the condenser plate 1 with respect to the evaporator plate 2 during operation. As depicted, the heat pipe 3 is at least partially formed as an S-shaped spring element.

Fig. 2 shows the path taken by the heat pipe 3 in more detail and viewed at right angles to the plane in which the path in contained.

The path followed by at least part of the heat pipe 3 comprises a first arcuate portion 21 and a second arcuate portion 22 opposing the first arcuate portion 21 such as to form an S-shape. The path is framed by a frame 23 which is bordered by both the hot source 5 and the cold source 4. As explained in greater detail below, the frame 23, defines the physical restrains within which the device is designed to operate. The arc measure θ1 of the first arcuate portion 21 and the arc measure θ2 of the second arcuate portion 22 is at least 180 degrees. Arc measure is the angular measure of an arc. In effect, arc measure defines the proportional extent of the arc in relation to a complete circle, an ellipse or a loop, for example. A semi-circle has an arc measure of 180 degrees.

For the example shown in fig. 2, the arc measure of both the first arcuate portion 21 and the second arcuate portion is 270 degrees.

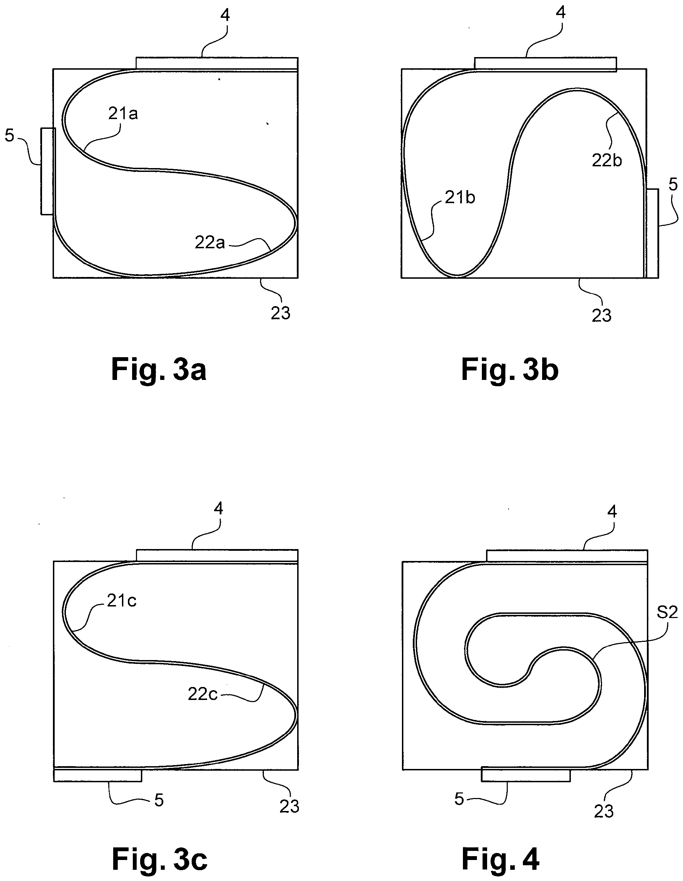

Fig 3a - 3c shows further examples of the S-shaped path of the present invention and for which each of the first arcuate portion 22 and the second arcuate portion 23 have arc measure of at least 180 degrees.

For the S-shaped path shown in fig. 3a, the arc measure of the first arcuate portion is 180 degrees and the arc measure of the second arcuate portion 22a is greater than 180 degrees. For the S-shaped path shown in fig. 3b, the arc measure of the first arcuate portion 21b is greater than 180 degrees and that of the second arcuate portion 22b is 180 degrees. Accordingly, the S-shaped paths shown in fig. 3a and 3b each have one of the arc measure of the first arcuate portion and the second arcuate portion being 180 degrees and the other being greater than 180 degrees. As shown in fig 3a and fig 3b one of the arc measure the first arcuate portion and the arc measure of the second arcuate portion is 270 degrees.

Fig. 3c shows an S-shaped path with the arc measure of the first arcuate portion 21c and the arc measure of the second arcuate portion 22c being equal to 180 degrees.

More complex paths falling within the remit of the invention are also possible. Fig. 4 shows an example of a path comprising an at least partially S-shaped path S2 within an S-shaped path.

As described above, in relation to the path shown in fig. 2, the S-shaped path is framed by a frame 23. In this example, the frame is a parallelepiped. That is to say, having opposite sides parallel. As will be appreciated by the reader, the frame defines the space in which the thermal and mechanical management device has to operate. Also shown in fig. 2 is that the S-shaped path is flush with the frame at either end. That is to say, the tangent to the path located at a one end of the S-shaped path and at the other end of the S-shaped path is parallel to a side of the parallelepiped frame thus is flush with the hot source 5 and the cold source 4. In other arrangement, the S-shaped path is flush with the frame at one end or the other end. In this way, and as depicted in fig. 1, the ends of the path integrate smoothly with the evaporator plate 2 and the condenser plate 1 respectively.

For the S-shaped paths shown in figs. 3a - 3c, these are likewise flush with the frame at either end. Fig. 3a and fig. 3b show an arrangement wherein the hot source 5 and the cold source 4 are situated on sides of the frame 23 which are not parallel with one another. In the arrangement of fig. 3c, the hot source 5 and the cold source 4 are situated on sides of the frame 23 which are parallel with one another.

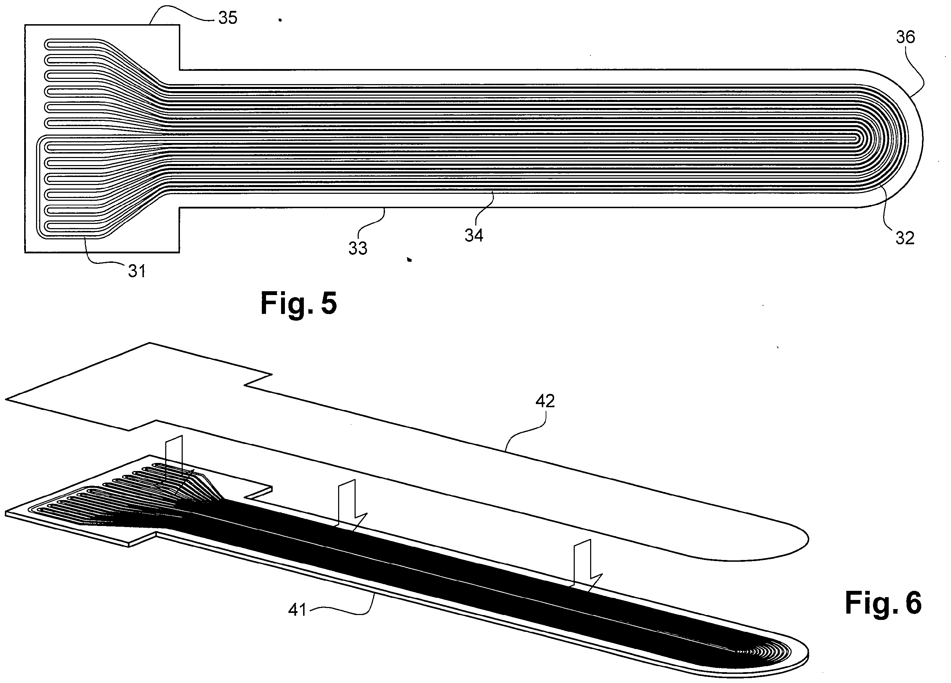

The heat pipe following the S-shaped path described above may be a pulsated heat pipe thus having all of the advantages recited. Fig. 5 depicts the heat pipe 3 of fig. 1 prior to being bent to follow the S-shaped path described above. The depiction of fig. 5 shows the arrangement of piping which comprises a continuous tubing circuit made up of lengthwise ducts 34 running the length of an adiabatic section 33 of the heat pipe. When bent into the S-shaped path described above, the adiabatic section 33 is coincident with the first and second arcuate portions of the S-shaped path.

At either end of the lengthwise ducts are fluidly attached turnaround ducts 31, 32 such as to form a pair of phase change sections 35, 36 to the continuous fluid circuit of the heat pipe 3. The turnaround ducts 31, 32 are respectively contained within the condenser 1 and the evaporator 2 of the heat pipe as depicted in Fig. 1. Typically, the turnaround ducts and/or the lengthwise ducts have a rectangular cross-section.

A filling within the continuous fluid circuit of slugs of a fluid in a liquid phase interspersed by gas bubbles of the fluid in gas phase provides to assure operation as a PHP.

Fig. 6 depicts how the ribbon form PHP of the present invention can be formed. As depicted, the adiabatic section 33 and the phase change sections 35, 36 of the heat pipe 3 comprise a base sheet 41 with machined troughs defining the path of the continuous fluid circuit and a cover sheet 42 applied to the base sheet such as to form the ducts. Individual component parts of the heat pipe are joined by, for example, brazing. Other techniques for joining the base sheet and the cover sheet include laser welding, with green and blue laser welding being particularly suited to copper.

Alternatively, the turnabout ducts of the phase change sections of the heat pipe may be formed by additive manufacturing technique and the adiabatic section 33 may comprise extruded pipes which define the path of the lengthwise ducts.

As a further alternative, the turnaround ducts of the phase change sections of the heat pipe can be formed by additive manufacturing technique and the adiabatic section can comprise a base sheet with machined troughs defining the lengthwise ducts of the path of the continuous fluid circuit and a cover sheet applied to the base sheet such as to form the lengthwise ducts.

The working fluid and the material of the heat pipe are chosen depending on the required operating conditions. For the case of medium voltage switching circuitry considered here, typically, the working fluid will be water and that of the turnaround ducts and lengthwise ducts, copper or a copper alloy. Aluminium and aluminium alloys are also favoured due to the high heat conductance. Water is, however, not compatible with aluminium due to mutual reactivity producing hydrogen gas. The lengthwise ducts may be formed from a polymer material chosen for adequate thermal properties in view of operating conditions.

The thermal and mechanical management device described above may be incorporated into a system comprising a hot source 5 and a cold source 4 with the evaporator plate 2 of the thermal and mechanical management device connected to the hot source 5 and the condenser plate of the thermal and mechanical management device connected to the cold source. In this way, the hot source is cooled, that is to say thermally managed, by a heat flow through the thermal and mechanical management device 10. In situations where the hot source and the cold source move relative to one another, for example due to displacements or operational vibrations of the hot source and the cold source, these movements are accommodated by the thermal and mechanical management device.

As described in the introduction above, in gas insulated electrical switchgear, situations are envisaged in which hotspots require thermal management. Such hotspots, for example, which form on a current carrying part such as a busbar or other circuit breaker part are the hot source describe above. A casing or a heatsink forming part of the casing or a cooling pate connected to the casing, for example, constitute the cold source. The thermal and mechanical management device described above may be used in such situations. Further as described above, the space within such switching gear is often limited. In such situations where the thermal and mechanical management device is enclosed within a casing, the casing comprises the frame as well as the cold source.

Where there is an electrical potential difference between the hotspot and the casing, the thermal and mechanical management device may be connected at one end to the hot source or the cold source via an electrically insulating assembly.

Although the thermal and mechanical management device is described in relation to applications within medium voltage switching equipment, it is envisaged that broader application is possible where heat dissipation is required between components of a system which are not rigid with respect to one another.

## Claims

1. A thermal and mechanical management device (10) for conducting heat from a hot source (5) to a cold source (4) in a gas insulated electrical switching gear, the device comprising a heat pipe (3) formed as a spring element for connecting the hot source (5) to the cold source (4).

2. The device according to claim 1 wherein the heat pipe (3) is at least partially formed as an S-shaped spring element.

3. The device according to claim 2 wherein at least part of the heat pipe (3) follows an S-shaped path comprising:
a first arcuate portion (21),
a second arcuate portion (22) opposing the first portion, and
is framed by a frame (23) bordered by both the hot source (5) and the cold source (4);
wherein the arc measure (θ1, θ2) of each of the first and second arcuate portions is at least 180 degrees.

4. The device according to claim 3 wherein the arc measure of one of the first and second arcuate portions is greater than 180 degrees and advantageously is greater than 270 degrees.

5. The device according to claim 3 wherein the arc measure of both of the first and second arcuate portions is greater than 180 degrees and advantageously is greater than 270 degrees.

6. The device according to any one of claims 3 to 5 wherein the heat pipe follows a path comprising an at least partially S-shaped path (S2) within the S-shaped path.

7. The device according to any one of claims 3 to 6 wherein the frame (23) is a substantially parallelepiped frame.

8. The device according to claim 7 wherein a tangent to the path located at a one end of the S-shaped path and/or at the other end of the S-shaped path is parallel to a side of the parallelepiped frame, and advantageously wherein the tangent to the path located at the one end of the S-shaped path and the tangent to the path located at the other end of the S-shaped path are parallel to substantially parallel sides of the parallelepiped frame (23).

9. The device according to any of claims 1 to 8 wherein the heat pipe (3) has the form of a ribbon.

10. The device according to any of claims 1 to 9 wherein the heat pipe (3) is a pulsated heat pipe.

11. The device according to claim 10 wherein the pulsated heat pipe comprises: a continuous tubing circuit made up of:
lengthwise ducts (34) running the length of an adiabatic section (33) of the heat pipe comprising the first and second arcuate portions (21, 22),
turnaround ducts (31, 32) fluidly attached to each end of the lengthwise ducts (34) such as to form a pair of phase change sections (35, 36) to the continuous fluid circuit of the heat pipe (3), and
a filling within the continuous fluid circuit comprising slugs of a liquid in a liquid phase interspersed by gas bubbles of the liquid in gas phase.

12. The device according to claim 11 wherein the adiabatic section (33) and the phase change sections (35, 36) of the heat pipe (3) comprise a base sheet (41) with machined troughs defining the path of the continuous fluid circuit and a cover sheet (42) applied to the base sheet such as to form the ducts; or
wherein the turnabout ducts (31, 32) of the phase change sections (35, 36) of the heat pipe (3) are formed by additive manufacturing technique and the adiabatic section comprises extruded pipes defining the path of the lengthwise ducts; or
wherein the turnaround ducts of the phase change sections (35, 36) of the heat pipe (3) are formed by additive manufacturing technique and the adiabatic section comprises a base sheet with machined troughs defining the lengthwise ducts of the path of the continuous fluid circuit and a cover sheet applied to the base sheet such as to form the lengthwise ducts (34).

13. The device according to claim 12 wherein the base sheet (41) and the cover sheet (42) of the heat pipe (3) are connected by brazing.

14. The device according to any of claims 11 to 13 wherein the turnaround ducts (31, 32) of the heat pipe comprise copper or an alloy of copper; and/or
wherein the lengthwise ducts (34) of the heat pipe (3) comprise copper or an alloy of copper; or
wherein the lengthwise ducts (34) of the adiabatic section (33) of the heat pipe (3) comprise polymer material.

15. A system comprising:
a hot source (5),
a cold source (4), and
a thermal and mechanical management device (10) according to any of claims 1 to 14 which is connected at a one end to the hot source and at the other end to the cold source, and advantageously wherein the hot source is thermally connected to a hotspot within a gas insulated electrical switching gear enclosed within a casing and wherein the casing comprises the frame and the cold source, and advantageously wherein at least one of the end of the thermal and mechanical management device is connected to the hot source or the cold source via an electrically insulating assembly.
